# NEUE EUROPÄISCHE PATENTSCHRIFT

(11) **EP 1 962 995 B2**
(45) Veröffentlichungstag und Bekanntmachung des Hinweises auf die Entscheidung über den Einspruch: **06.09.2017**
(45) Hinweis auf die Patenterteilung: 18.11.2009
(21) Anmeldenummer: 06829637.5
(22) Anmeldetag: 14.12.2006
(51) Int. Cl.: B29K 67/00

(54) **VORRICHTUNG ZUM VERMISCHEN EINES FLUIDS MIT EINEM GROSSEN GASMENGENSTROM, INSBESONDERE ZUM EINBRINGEN EINES REDUKTIONSMITTELS IN EIN STICKOXIDE ENTHALTENDES RAUCHGAS**
APPARATUS FOR MIXING A FLUID WITH A LARGE GAS STREAM, ESPECIALLY FOR INTRODUCING A REDUCING AGENT INTO A FLUE GAS COMPRISING NITROGEN OXIDES
DISPOSITIF POUR LE MELANGE D' UN FLUIDE AVEC UNE GRANDE QUANTITE DE GAZ, NOTAMMENT POUR INTRODUIRE UN REDUCTEUR DANS UN GAZ DE COMBUSTION CONTENANT UN OXYDE D'AZOTE

(30) Priorität: 15.12.2005 DE 102005059971
(43) Veröffentlichungstag der Anmeldung: 03.09.2008
(73) Patentinhaber: FISIA Babcock Environment GmbH, 51643 Gummersbach (DE)
(72) Erfinder: BECKMANN, Gerd, 51653 Gummersbach (DE); PRIESMEIER, Ulrich, 51643 Gummersbach (DE)
(74) Vertreter: Wagner & Geyer
(86) Internationale Anmeldenummer: PCT/EP2006/012087
(87) Internationale Veröffentlichungsnummer: WO 2007/073881

(56) Entgegenhaltungen:
- EP-A- 1 681 090
- EP-A1- 0 637 726
- EP-A1- 1 166 861
- EP-A2- 0 956 897
- DD-A1- 269 101
- DE-A1- 3 043 239
- DE-A1- 19 929 765
- DE-A1- 19 962 616
- DE-B- 1 071 604
- DE-C1- 3 723 618
- FR-A- 1 530 772

## Beschreibung

Die Erfindung betrifft eine Vorrichtung zum Vermischen eines Fluids mit einem in einem Gaskanal strömenden großen Gasmengenstrom (Grundströmung), insbesondere zum Einbringen eines Reduktionsmittels in ein Stickoxide enthaltendes Rauchgas,
mit mindestens einer Düsenlanze mit mindestens einer Düse für die Zuführung des Fluids, deren Achse mit der Strömungsrichtung des Gasmengenstroms einen Winkel bildet, und mindestens einem der Düse mit Abstand zugeordneten flächigen Mischerelement, das mit der Strömungsrichtung des Gasmengenstroms einen Winkel bildet, wobei sich an dem Mischerelement Strömungswirbel ausbilden und zumindest ein Teil des Fluids in diese Strömungswirbel gelangt.

Eine solche Vorrichtung ist aus der DE 37 23 618 C1 bekannt, wobei das Reduktionsmittel in Gasform in den großen Gasmengenstrom (Rauchgas) eingebracht wird. Das statische Mischelement wird eingesetzt, um die grundsätzlich sehr langen Mischungswege zu verkürzen.

Bei SCR-Anlagen zur Entstickung (Selektive Catalytische Reduktion) von Rauchgasen z.B. von Kraftwerksfeuerungen mittels Reduktionsmittel und Katalysator ist es üblich, dass im Fall von NH3 als Reduktionsmittel dieses in Form von druckverflüssigtem NH3 oder von Ammoniakwasser (NH4OH) gelagert und vorverdampftes NH3 mit einem Traggasstrom in den Rauchgasstrom eingedüst und mit diesem vermischt wird. Im Fall von Harnstoff als Reduktionsmittel wird zunächst eine wässrige Harnstofflösung erzeugt, die nach geeigneter Aufarbeitung dann ebenfalls gasförmig in den Rauchgasstrom eingedüst wird.

Bei der bekannten Vorrichtung ist das Mischerelement ein sich über die Breite des Rauchgaskanals erstreckendes rechteckiges Blech. Die Düsenlanze mit der Düse liegt im wesentlichen seitlich und parallel zu der bezogen auf die Strömungsrichtung des Rauchgasstroms stromauf liegenden Kante des Mischerblechs und der Düsenstrahl des gasförmigen Reduktionsmittels in Form des NH3-Traggas-Gemisches wird seitlich auf die Rückseite des Mischerelements gedüst. Die Verteilung erfolgt in den Strömungswirbeln unmittelbar an und hinter dem Mischblech und durch die erhöhte Turbulenz in der Rauchgasströmung stromab des Mischblechs. Bei einem großen Kanalquerschnitt sind querschnittsfüllend nebeneinander Düsenlanzen, sowie mehrere den Düsenlanzen zugeordnete Strömungsbleche vorgesehen.

Es ist auch eine Eindüsung von Ammoniakwasser (flüssiges NH40H) oder Harnstofflösung ohne Vorverdampfung direkt in den Rauchgasstrom auf der Rückseite eines Mischerelements vorgeschlagen worden, wobei die Düse so auf der Rückseite (Lee-Seite) des Mischelements angeordnet ist, dass die Eindüsrichtung parallel zum Gasmengenstrom des Rauchgases verläuft. Der Düsenstrahl besteht aus einem Gemisch von Gas und Flüssigkeitströpfchen, die in der ca. 300°C warmen Umgebung nach einer gewissen Zeit verdampft sind. Dabei besteht die Gefahr, dass Reduktionsmitteltröpfchen zusammen mit in den Rauchgasen enthaltenen Staubteilchen zur betonartigen Belagbildung auf dem oder den eingesetzten Mischerelementen, Tragelementen für das Mischerelement und gegebenenfalls auf den Rauchgaskanalwänden führen. Die Düse muß daher soweit von dem Mischerelement entfernt angeordnet sein, dass nicht verdampfte Tröpfchen auch unter dem Einfluß von Rückströmungen (Wirbelzöpfen) nicht auf die Mischerscheibe treffen können. Dies führt zu einer Verlängerung der für die Einmischung erforderlichen einbautenfreien Rauchgaskanallänge. Zusätzliche statische Mischerelemente im Rauchgasstrom nach der Eindüsung können wegen der Gefahr der Belagbildung nicht eingesetzt werden.

Es ist die Aufgabe der Erfindung, die gattungsgemäße Vorrichtung derart zu verbessern, dass bei direkter Eindüsung einer Flüssigkeit als Fluid, insbesondere flüssigem Reduktionsmittel, bei kurzem Mischweg eine Belagbildung in wesentlichem Umfang vermieden wird.

Diese Aufgabe wird bei einer gattungsgemäßen Vorrichtung dadurch gelöst, dass die Düsenlanze mit einer Zuführung von Flüssigkeit verbunden ist und mit mindestens zwei gegen die Strömungsrichtung des Gasmengenstroms und gegensinnig zueinander geneigten Zerstäuberdüsen bestückt ist, dass die Zerstäuberdüsen einem scheibenartig ausgebildeten Mischerelement zugeordnet sind und dass die Zerstäubung derart geführt ist, dass die in dem aus den Zerstäuberdüsen jeweils austretenden Düsenstrahl enthaltenen verdampften gasförmigen Anteile in die Strömungswirbel eintreten , während die nicht verdampften tröpfchenförmigen Anteile aufgrund ihrer Trägheit und des Zerstäuberwinkels nicht in die Strömungswirbel in der Nähe der Mischerscheibe eintreten.

Die Zerstäuberdüsen sind bezogen auf den Gasmengenstrom stromab oder stromauf der Mischerscheibe angeordnet.

Bei beiden Ausführungsformen wird sichergestellt, daß große, unverdampfte Tropfen aufgrund ihrer Trägheit weitgehend der ursprünglichen Strahlachse folgen und nicht auf die Mischerscheibe treffen und dort zur Belagbildung führen könnten, während das im heißen Rauchgas verdampfte NH3 aus dem zugeführten flüssigen Reduktionsmittel der Rauchgasströmung folgt und als Gas in die sich unmittelbar hinter der Mischerscheibe aufrollenden Wirbelschleppen eingebunden wird. Auf diese Weise wird auch bei der Direkteindüsung von NH40H eine Vorverteilung erreicht.

Vorzugsweise ist die Mischerscheibe kreisförmig, elliptisch, oval, parabelförmig, rautenförmig oder dreieckförmig ausgebildet, wie dies aus der DE 37 23 618 C1, Sp.2, Z. 40 - 45 bekannt ist.

Es ist zweckmäßig, wenn der Winkel zwischen den beiden Zerstäuberdüsen im Bereich zwischen 60° und 120°, vorzugsweise bei 90°, liegt.

Die Mischerscheibe ist vorzugsweise unter einem Winkel im Bereich zwischen 30° bis 90° zur Strömungsrichtung des Gasmengenstroms geneigt.

Es ist zweckmäßig, wenn die Zerstäuberdüsen 2-Stoff-Düsen mit einem Zerstäubungshilfsmedium sind, vorzugsweise mit Druckluft oder Wasserdampf als Zerstäubungshilfsmittel. Mit 2-Stoff-Düsen kann ein feines Tröpfchenspektrum erzeugt werden.

Es können aber auch Druckdüsen ohne Hilfsmedium als Zerstäuberdüsen eingesetzt werden.

Um einen. Tröpchenfall am Düsenaustritt zu vermeiden, können die Zerstäuberdüsen mit Sperr- bzw. Schleierluft ausgerüstet sein.

Um die Tröpfchentrajektorien noch in ihrer Ausrichtung zu optimieren, ist die von den Düsenstrahlen der Zerstäuberdüsen aufgespannte Ebene unter einem Winkel im Bereich von 0° bis 30° gegen die Strömungsrichtung des Gasmengenstroms geneigt.

Die Erfindung wird nachstehend beispielsweise anhand der Figuren näher erläutert. Es zeigt:
- Fig.1: eine dreidimensionale Darstellung eines sich an einer von einem Gasmengenstrom angeströmten und gegen den Strom unter einem Winkel α geneigten kreisförmigen Scheibe einstellenden Hufeisenwirbels mit Wirbelschleppe,
- Fig.2: eine Seitenansicht quer zur Linie A - A gemäß Fig. 1,
- Fig.3: eine Vorderansicht mit Blick auf die Lee-Seite der Scheibe quer zur Linie B - B in der Darstellung gemäß Fig. 1,
- Fig.4: eine Seitenansicht vergleichbar Fig.2 bei einer erster Ausführungsform der erfindungsgemäßen Vorrichtung, bei der die Zerstäuberdüsen bezogen auf Gasmengenstrom stromab der Mischerscheibe angeordnet sind, wobei der Querschnitt des den Gasmengenstrom führenden Gaskanals mit dargestellt ist
- Fig.5: eine Rückansicht mit Blick auf die Luv-Seite der Scheibe quer zur Linie B - B in der Darstellung gemäß Fig. 1,
- Fig.6: eine Seitenansicht vergleichbar Fig.4 bei einer zweiten Ausführungsform der erfindungsgemäßen Vorrichtung, bei der die Zerstäuberdüsen bezogen auf Gasmengenstrom stromauf der Mischerscheibe angeordnet sind, und
- Fig.7: eine Vorderansicht mit Blick auf die Lee-Seite der Scheibe quer zur Linie B - B in der Darstellung gemäß Fig. 1.

Bei der Ausbildung von Wirbelschleppen handelt es um ein natürliches Phänomen in dreidimensionalen Strömungen an einem Körper. (Vgl. Prandtl, Oswatitsch, Wieghardt : Führer durch die Strömungslehre, 9. Auflage 1990; ISBN 3-528-28209-6, S. 229, Bild 4.41 und zugehörige Beschreibung verwiesen).

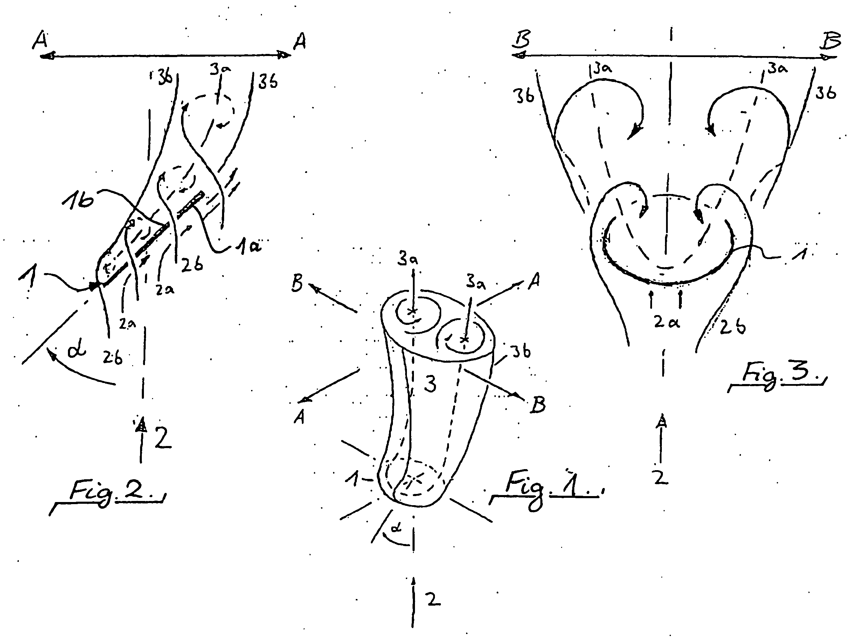

Die Entstehung, die Form und Lage solcher Wirbelschleppen im Abstrom von Mischerscheiben sollen zunächst in den Fig. 1 - 3 schematisch dargestellt und an ihnen beschrieben werden.

Eine kreisförmige Scheibe 1 ist im Winkel α gegen den in der Fig.1 von unten kommenden strömenden Gasmengenstrom 2 geneigt. Auf der Luv-Seite 1a der Scheibe wird der Gasmengenstrom aus seiner Hauptströmungsrichtung abgelenkt und es entsteht ein Überdruckgebiet. Der Teilstrom 2a des Gasmengenstroms 2 strömt mit vorgegebenem Winkel unter der Scheibe entlang. Auf der Lee-Seite 1 b der Scheibe bildet sich ein Unterdruckgebiet, das von dem Teilstrom 2b der Gasmengenstroms über den Rand der Scheibe aufgefüllt wird. Durch die Strömungsumlenkung am Rand der Scheibe bildet sich ein Hufeisenwirbel 3 mit der gestrichelt dargestellten Wirbelachse 3a, der sich in Form einer Wirbelschleppe mit zwei symmetrisch rotierenden Wirbeln stromab der Scheibe fortsetzt. Die seitlichen Wirbel des Hufeisenwirbels setzen sich als Wirbelschleppe fort, überlagern sich mit dem Gasmengenstrom (Grundströmung) und breiten sich mit Grundströmung aus. Der Strömungszustand innerhalb der Wirbelschleppe ist hoch turbulent. Die schematisch dargestellte Grenze 3b von Hufeisenwirbel und Wirbelschleppe darf nicht als scharfe Abgrenzung verstanden werden. Die Lage und die Struktur der, sowie die gegenläufigen Drehrichtungen der beiden Wirbel können mit geeigneter Meßtechnik experimentell bestimmt werden.

Bei anderen Scheibenformen wie Ellipsenform, Ovalform, Parabelform, Rautenform oder Dreiecksform bilden sich vergleichbare Wirbel mit Wirbelschleppen aus.

Die turbulente Durchmischung von Wirbelschleppen und Gasmengenstrom wird genutzt, um einen nahezu punktuell eingedüsten Gasstrom gleichmäßig über einen sehr großen Querschnitt zu verteilen.

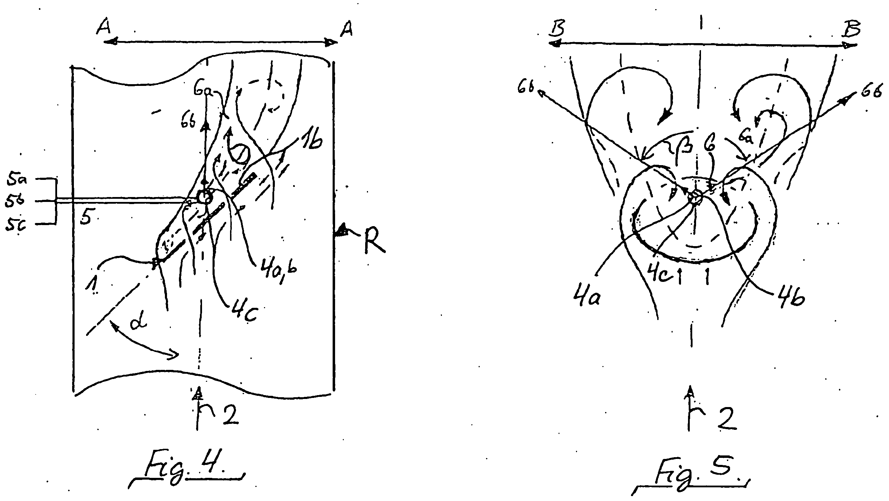

Bei der Ausführungsform der erfindungsgemäßen Vorrichtung gemäß Fig. 4 und 5 sind zwei Zerstäuberdüsen 4a und 4b am Kopf 4c einer sich in einen Rauchgaskanal R hinein erstreckenden Düsenlanze 5 angeordnet. (Mehr als zwei Zerstäuberdüsen können eingesetzt werden; auch ist der Einsatz von Druckdüsen möglich). Die Zerstäuberdüsen sind auf der Lee - Seite 1 b der vorzugsweise kreisförmig ausgebildeten Mischerscheibe 1 in einem vorbestimmten Abstand von ihr angeordnet. Der jeweils aus einer der Düsen 4a bzw. 4b austretende Düsenstrahl enthält gasförmige Bestandteile 6a und unverdampfte Tröpfchen 6b. Die beiden Zerstäuberdüsen 4a und 4b schließen einen Winkel β von 120° ein und sind gegen die Grundströmung geneigt. Andere Winkel sind möglich. Bevorzugt wird der Bereich zwischen 60° und 120°.

Die von den Düsen 4a und 4b aufgespannte Ebene ist nicht gegen die Grundströmung geneigt.

In den Fig. 4 und 5 wird das flüssige Reaktionsmittel 5a mittels eines Zerstäubungshilfsmedium 5c zerstäubt und der Düsenstrahl 6 von Sperr- bzw. Schleierluft 5c umgeben.

In den Fig. 4 - 7 sind schematisch neben den Teilströmen 2a und 2b schematisch die Ströme 6a (gasförmigen Bestandteil des Düsenstrahls 6) und 6b (unverdampfte Tröpfchen) des Eindüsstroms 6 dargestellt. Der verdampfte Teil 6a des Eindüsstroms folgt - wie in den Figuren dargestellt - den Krümmungen der Grundströmung und wird in die Wirbelströmung 3 eingerollt. Die unverdampften Tröpfchen 6b folgen ihrer Trägheit unter dem gewählten Eindüswinkel β und durchdringen somit auf der Lee-Seite 1b der Scheibe 1 die auf die Lee - Seite zurückführenden Wirbel, so dass eine Belagbildung aus Tröpfchen und Feinstaub aus dem Rauchgas im wesentlichen vermieden wird.

Die Tröpfchen des Teilstroms 6b verdampfen später im Rausgasstrom und werden durch die dort vorhandenen Turbulenzen in ausreichendem Maße eingemischt.

Der Teilstrom 6a kann auch noch Feinstströpfchen enthalten, die aber schnell verdampfen und daher zur Belagbildung - wenn überhaupt - nur wenig beitragen. Bezogen auf die Menge an Reduktionsmittel enthält der Teilstrom 6a wesentlich mehr an Reduktionsmittel als der Teilstrom 6b. Bei nicht erfindungsgemäßem Durchdringen der Wirbelzöpfe würde der geringere Teilstrom 6b aber zu einer erheblichen Belagbildung führen.

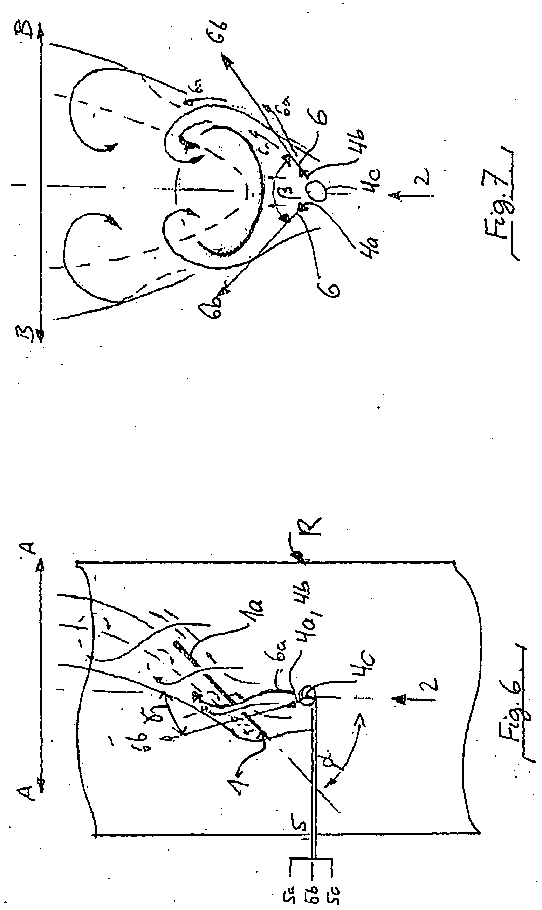

Bei der Ausführungsform gemäß den Fig. 6 und 7 ist der Düsenkopf mit den Zerstäuberdüsen 4a und 4b stromauf der Mischerscheibe 1 angeordnet. Die Zerstäuberdüsen 4a und 4b sind so angeordnet, dass die Achsen der Düsenstrahlen 6 auf beiden Seiten in hinreichendem Abstand neben der Mischerscheibe 1 verlaufen. Der Abstand zur Scheibe kann vorzugsweise ca. 0,5 m betragen. Auch bei dieser Ausführungsform durchdringen die Tröpchentrajektorien 6b die Mischerscheibe zu gerichteten Wirbel.

Bei der Ausführungsform gemäß den Figuren 6 und 7 ist die von den Düsen 4a und 4b aufgespannte Ebene gegen die Grundströmung um den Winkel γ = 20° geneigt.

Bei dieser Ausführungsform und bei der Ausführungsform gemäß Fig. 4 - 5 ist ein Neigungswinkel γ im Bereich von 0° bis 30° möglich.

Bei der Ausführungsform gemäß Fig. 6 und 7 ist es von Vorteil, dass der aus technischen Gründen oft ungenutzte Raum stromauf der Micherscheibe 1 für die Anordnung der Düsenlanze 5 genutzt werden kann. Zudem besteht bei dieser Ausführungsform die Freiheit die Düsenlanze 5 unabhängig von der Neigung der Mischerscheibe 1 gegen die Grundströmung aus einer beliebigen Richtung von der Wand des Kanals K zur Eindüsstelle zu führen, ohne das dabei bekanntermaßen sehr aufwendige Durchdringen der Mischerscheibe 1 ausgeführt werden müssen.

Es ist selbstverständlich, dass bei großen Kanalquerschnitten mehrere Mischerscheiben mit zugeordneten Zerstäuberdüsen über den Kanalquerschnitt verteilt vorgesehen seien können. Es können auch mehr als zwei Düsen z.B. in Igelanordnung einer Mischerscheibe zugeordnet sein. Sie müssen nur so angeordnet sein, dass die Tröpchentrajekorien die Wirbel durchdringen.

### Bezugszeichenliste

- 1: Scheibe (Mischerscheibe)
- 1a: Luv - Seite der Scheibe
- 1b: Lee - Seite der Scheibe
- 2: Gasmengenstrom
- 2a: Gasmengenstrom, Teilstrom auf der Luv-Seite 1a der Scheibe
- 2b: Gasmengenstrom, Teilstrom zur Lee-Seite 1bder Scheibe
- 3: Hufeisenwirbel und Wirbelschleppe
- 3a: Wirbelachse
- 3b: Außengrenze des Wirbels
- 4: Düsenlanze
- 4a: Zerstäuberdüse
- 4b: Zerstäuberdüse
- 4c: Düsenkopf
- 5a: Zuführung von flüssigem Reduktionsmittel
- 5b: Zuführung von gasförmigen Zerstäuberhilfsmedium
- 5c: Zuführung von Sperrluft bzw. Schleierluft
- 6: Düsenstrahl
- 6a: gasförmiger Anteil
- 6b: unverdampfte Tröpfchen
- R: Rauchgaskanal

## Patentansprüche

1. Vorrichtung zum Vermischen eines Fluids mit einem in einem Gaskanal strömenden großen Gasmengenstrom,
mit mindestens einer Düsenlanze mit mindestens einer Zerstäuberdüse für die Zuführung des Fluids, deren Achse mit der Strömungsrichtung des Gasmengenstroms einen Winkel bildet, und
mindestens einem der mindestens einen Zerstäuberdüse mit Abstand zugeordneten flächigen Mischerelement, das mit der Strömungsrichtung des Gasmengenstroms einen Winkel bildet,
wobei sich an dem Mischerelement Strömungswirbel im Gasmengenstrom ausbilden und zumindest ein Teil des Fluids in diese Strömungswirbel gelangt,
**dadurch gekennzeichnet,**
**dass** die Düsenlanze (5) mit einer Zuführung (5a) von Flüssigkeit verbunden ist und mit mindestens zwei gegen die Strömungsrichtung des Gasmengenstroms (2) und gegensinnig unter einem Zerstäuberwinkel (β) zueinander geneigten Zerstäuberdüsen (4a, 4b) bestückt ist,
**dass** die Zerstäuberdüsen bezogen auf den Gasmengenstrom (2) stromab auf der Lee-Seite (1b) oder stromauf auf der Luv-Seite (1a) des scheibenartig ausgebildeten Mischerelements (1) angeordnet sind und
**dass** die Zerstäubung derart geführt ist, dass die in dem aus den Zerstäuberdüsen jeweils austretenden Düsenstrahl (6) enthaltenen verdampften gasförmigen Anteile (6a) in die Strömungswirbel (3;3a;3b) des Gasmengenstrom (2) eintreten, während die nicht verdampften tröpfchenförmigen Anteile (6b) aufgrund ihrer Trägheit und des Zerstäuberwinkels (β) nicht in die Strömungswirbel (3;3a;3b) des Gasmengenstroms (2) in der Nähe der Mischerscheibe (1) eintreten.

2. Vorrichtung nach Anspruch 1,
**dadurch gekennzeichnet,**
**dass** die Mischerscheibe (1) kreisförmig, elliptisch, oval, parabelförmig, rautenförmig oder dreieckförmig ausgebildet ist.

3. Vorrichtung nach Anspruch 1 oder 2,
**dadurch gekennzeichnet,**
**dass** der Zerstäuberwinkel (β) zwischen den beiden Zerstäuberdüsen im Bereich zwischen 60° und 120° liegt.

4. Vorrichtung nach einem der Ansprüche 1 bis 3,
**dadurch gekennzeichnet,**
**dass** die Mischerscheibe (1) unter einem Winkel (α) im Bereich zwischen 30° bis 90° zur Strömungsrichtung des Gasmengenstroms geneigt ist.

5. Vorrichtung nach einem der Ansprüche 1 bis 4,
**dadurch gekennzeichnet,**
**dass** die Zerstäuberdüsen (4a, 4b) 2-Stoffdüsen mit einem Zerstäubungshilfsmedium (5b) sind.

6. Vorrichtung nach einem der Ansprüche 1 bis 5,
**dadurch gekennzeichnet,**
**dass** die Zerstäuberdüsen (4a, 4b) Druckdüsen sind.

7. Vorrichtung nach einem der Ansprüche 1 bis 6,
**dadurch gekennzeichnet,**
**dass** die Zerstäuberdüsen (4a, 4b) mit Sperrluft (5c) ausgerüstet sind.

8. Vorrichtung nach einem der Ansprüche 1 bis 7,
**dadurch gekennzeichnet,**
**dass** die von den Düsenstrahlen der Zerstäuberdüsen aufgespannte Ebene unter einem Winkel (γ) im Bereich von 0° bis 30° gegen die Strömungsrichtung des Gasmengenstroms (2) geneigt ist.

9. Vorrichtung nach einem der Ansprüche 1 bis 8 ,
**dadurch gekennzeichnet,**
**dass** der Zerstäuberwinkel (β) 90° beträgt.

## Claims

1. Apparatus for mixing a fluid with a large gas stream flowing in a gas duct, having at least one metering lance with at least one nozzle for supplying the fluid, the axis of which forms an angle with the direction of flow of the gas stream, and
at least one flat mixer element associated with and spaced from the at least one nozzle, which forms an angle with the direction of flow of the gas stream,
whereby flow eddies form in the gas stream at the mixer element and at least a portion of the fluid enters into these flow eddies, **characterized,**
**in that** the metering lance (5) is connected to a liquid supply (5a) and is provided with at least two atomizer nozzles (4a 4b), which are inclined relative to the direction of flow of the gas stream (2) and are inclined in opposite directions relative to one another to form an atomizer angle (β),
**in that** the atomizer nozzles (4a, 4b), relative to the gas stream (2), are disposed downstream on the lee side (1b) or upstream on the windward side (1a) of the disc-like mixer element (1) and in that and the atomization is effected in such a way that the vaporized gaseous portions (6a) contained in the nozzle stream (6) respectively exiting the atomizer nozzles enter the flow eddies (3; 3a; 3b), while the non-vaporized dropletlike portions (6b) due to their inertia and the atomizer angle (β) do not enter the flow eddies (3; 3a; 3b) in the vicinity of the mixer disk (1).

2. Apparatus according to Claim 1,
**characterized**
**in that** the mixer disk (1) has a circular, elliptical, oval, parabola, diamond, triangular shape.

3. Apparatus according to Claims 1 to 2,
**characterized**
**in that** the angle (β) between the two atomizer nozzles is in the range of between 60° and 120°.

4. Apparatus according to one of the Claims 1 to 3,
**characterized**
**in that** the mixer disk (1) is inclined to the direction of flow of the gas stream at an angle (α) in the range of between 30° to 90°.

5. Apparatus according to one of the Claims 1 to 4,
**characterized**
**in that** the atomizer nozzles (4a, 4b) are 2-material nozzles having auxiliary atomization medium (5b).

6. Apparatus according to one of the Claims 1 to 5,
**characterized**
**in that** the atomizer nozzles (4a, 4b) are pressure nozzles.

7. Apparatus according to one of the Claims 1 to 6,
**characterized**
**in that** the atomizer nozzles (4a, 4b) are provided with blocking or screening air (5c).

8. Apparatus according to one of the Claims 1 to 7,
**characterized**
**in that** the plane defined by the nozzle streams of the atomizer nozzles is inclined to the direction of flow of the gas stream (2) at an angle (γ) in the range of from 0° to 30°.

9. Apparatus according to one of the Claims 1 to 8,
**characterized**
**in that** the atomizer angle (β) is 90°.

## Revendications

1. Dispositif de mélange d'un fluide à un grand courant massique de gaz passant dans un canal pour du gaz,
comprenant au moins une lance à buse ayant au moins une buse (4a, 4b) de pulvérisateur pour l'envoi du fluide, dont l'axe fait un angle avec le sens d'écoulement du courant massique de gaz, et
au moins un élément mélangeur plat associé à distance à la au moins une buse (4a, 4b) de pulvérisateur et faisant un angle avec le sens d'écoulement du courant massique de gaz,
dans lequel des tourbillonnements d'écoulement dans le courant massique de gaz se forme sur l'élément mélangeur et au moins une partie du fluide arrive dans ces tourbillonnements d'écoulement,
**caractérisé**
**en ce que,** la lance (5) à buse est attachée à une amenée de fluide (5a) et est équipée d'au moins deux buses (4a, 4b) de pulvérisateur inclinées par rapport au sens d'écoulement du courant (2) massique de gaz et en sens inverse l'une de l'autre en faisant un angle (β) de pulvérisateur,
**en ce que** les buses de pulvérisateur sont, rapporté au courant (2) massique de gaz, en aval du côté (1 b) sous le vent ou en amont du côté (1a) au vent de l'élément (1) mélangeur constitué sous la forme d'un disque et
**en ce que** l'on effectue la pulvérisation de façon à ce que les parties (6a) gazeuses évaporées contenues dans le jet (6) sortant respectivement des buses du pulvérisateur pénètrent dans les tourbillons (3, 3a, 3b) d'écoulement du courant (2) massique de gaz, tandis que les parties (6b) sous forme de gouttelettes, qui ne sont pas évaporées, ne pénètrent pas, en raison de leur inertie et de l'angle (β) du pulvérisateur, dans les tourbillons (3, 3a, 3b) d'écoulement du courant (2) massique de gaz à proximité du disque (1) mélangeur.

2. Dispositif suivant la revendication 1, **caractérisé en ce que** le disque (1) mélangeur est circulaire, elliptique, ovale, parabolique, en forme de losange ou triangulaire.

3. Dispositif suivant la revendication 1 ou 2, **caractérisé en ce que** l'angle (β) du pulvérisateur entre les deux buses du pulvérisateur est compris entre 60° et 120°.

4. Dispositif suivant la revendication 1 à 3, **caractérisé en ce que** le disque (1) mélangeur est incliné d'un angle (α) compris entre 30° et 90° par rapport au sens d'écoulement du courant massique de gaz.

5. Dispositif suivant la revendication 1 à 4, **caractérisé en ce que** les buses (4a, 4b) du pulvérisateur sont des buses à deux matières ayant un milieu (5b) auxiliaire de pulvérisation.

6. Dispositif suivant l'une quelconque des revendications 1 à 5, **caractérisée en ce que** les buses (4a, 4b) du pulvérisateur sont des buses sous pression.

7. Dispositif suivant l'une des revendications 1 à 7, **caractérisée en ce que** les buses (4a, 4b) du pulvérisateur sont équipées d'air (5c) d'arrêt.

8. Dispositif suivant l'une des revendications 1 à 7, **caractérisée en ce que** le plan passant par les jets des buses du pulvérisateur sont inclinés d'un angle (γ) de 0° à 30° par rapport au sens d'écoulement du courant (2) massique de gaz.

9. Dispositif suivant l'une des revendications 1 à 8, **caractérisée en ce que** l'angle (β) du pulvérisateur est de 90°.
